# EUROPÄISCHE PATENTSCHRIFT

(11) **EP 4 340 180 B1**
(45) Veröffentlichungstag und Bekanntmachung des Hinweises auf die Patenterteilung: **30.10.2024**
(21) Anmeldenummer: 22196141.0
(22) Anmeldetag: 16.09.2022
(51) Int. Cl.: H02K 1/02, H02K 1/278, H02K 15/03

(54) **PERMANENTERREGTE DYNAMOELEKTRISCHE MASCHINE**
PERMANENTLY EXCITED DYNAMO-ELECTRIC MACHINE
MACHINE DYNAMO-ÉLECTRIQUE À EXCITATION PERMANENTE

(43) Veröffentlichungstag der Anmeldung: 20.03.2024
(73) Patentinhaber: Siemens Aktiengesellschaft, 80333 München (DE)
(72) Erfinder: BUSCHBECK, Jörg, 90482 Nürnberg (DE); VOLLMER, Rolf, 36129 Gersfeld (DE)
(74) Vertreter: Siemens Patent Attorneys

(56) Entgegenhaltungen:
- WO-A1-2006/064589
- DE-A1- 102012 211 960
- DE-A1- 102019 131 456
- JP-A- 2018 038 162
- JP-B2- 5 860 654
- US-A1- 2012 119 506
- SIEMENS AG: "Besonders feinkristalline, nachhaltige Permanentmagnete für Motor- und Generatoranwendungen", PRIOR ART PUBLISHING GMBH, PRIOR ART PUBLISHING GMBH, MANFRED-VON-RICHTHOFEN-STR. 9, 12101 BERLIN GERMANY, vol. Prior Art Journal 2022 #12, 15 June 2022 (2022-06-15), pages 41 - 43, XP007024723

## Beschreibung

Die Erfindung betrifft eine permanenterregte dynamoelektrische Maschine, insbesondere einen Motor, mit einem Stator und einem um eine Längsachse rotierbar gelagerten Rotor, wobei der Stator ein Wicklungssystem aufweist, wobei an dem Rotor Permanentmagnete angeordnet sind, wobei das magnetische Material der Permanentmagnete eine Vorzugsrichtung für die Magnetisierung aufweist, so dass in Richtung der jeweils lokalen Vorzugsrichtung Pfade durch den Permanentmagneten definierbar sind, wobei eine Magnetabmessung in Vorzugsrichtung zugeordnet zu einem Punkt an einer Polfläche definiert ist als die Pfadlänge von diesem Punkt bis zu einem korrespondieren Punkt an der anderen Polfläche entlang der Vorzugsrichtung durch den Permanentmagneten, wobei zwischen dem Rotor und dem Stator ein Spalt ausgebildet ist, wobei das Wicklungsystem derart ausgebildet und angeordnet ist, dass es mit den Permanentmagneten des Rotors über den Spalt elektromagnetisch wechselwirkt.

Aus der US 2004/150283 A1 ist eine permanenterregte dynamoelektrische Maschine, mit einem Stator und einem Rotor bekannt, mit einem Wicklungssystem und mit Permanentmagneten am Rotor, wobei die Permanentmagnete auf dem Rotor auf der dem Luftspalt zugewandten Seite einen Nord- und einen Südpol aufweisen.

Aus der WO 2006/064589 A1 ist bereits eine permanenterregte dynamoelektrische Maschine der eingangs genannter Art bekannt.

Aus der DE 10 2012 211960 A1 ist es bereits bekannt, ist bekannt Permanentmagnete auf CeFeB-Basis auszubilden. Gleichfalls geht dies aus der Veröffentlichung der SIEMENS AG: "Besonders feinkristalline, nachhaltige Permanentmagnete für Motor- und Generatoranwendungen, PRIOR ART PUBLISHING GMBH, PRIOR ART PUBLISHING GMBH, MANFRED-VON-RICHTHOFEN-STR. 9, 12101 BERLIN GERMANY, Bd. Prior Art Journal 2022 #12, 15. Juni 2022 (2022-06-15), Seiten 41-43, XP007024723," hervor. Aus der DE 10 2019 131456 A1 ist bereits eine permanenterregte dynamoelektrische Maschine der eingangs genannten Art bekannt.

Aus der JP 5 860654 B2 sind bereits elektrische Maschinen aufweisend einen Rotor mit Permanentmagneten, welche jeweils auf der dem Spalt zugewandten Seite einen Nordpol und einen Südpol aufweisen bekannt.

Hintergrundwissen über elektrische Maschinen aufweisend einen Rotor mit Permanentmagneten ist aus der JP 2018 038162 A entnehmbar.

Bei einschlägigen permanenterregten dynamoelektrischen Maschinen bzw. PM-Motoren wird die Dynamik von verschiedenen Einflussfaktoren beeinflusst. Neben dem eigenen polaren Massenträgheitsmoment wirken auch das thermisch zulässige Drehmoment, die elektrische Zeitkonstante, die Drehmomentgrenze durch die Motorspannung sowie das Sättigungsverhalten des magnetischen Kreises limitierend.

Die sich ergebende Dynamik ist in der Regel ein Auslegungskompromiss zwischen geringem Magnetvolumen und Materialkosten. Durch die Verwendung von teuren Neodym-Eisen-Bor-Magneten (NdFeB-Magente), die sich durch ein geringes Volumen auszeichnen, kann ein dynamisches Verhalten eines Motors erreicht werden.

Ausgehend von den Problemen und Nachteilen des Standes der Technik hat es sich die Erfindung zur Aufgabe gemacht, eine kostengünstigere Lösung für eine hohe Dynamik zu schaffen.

Zur erfindungsgemäßen Lösung der Aufgabe wird eine permanenterregte dynamoelektrische Maschine eingangs definierter Art mit den zusätzlichen Merkmalen des Kennzeichens des unabhängigen Anspruchs 1 vorgeschlagen. Die jeweils abhängigen Unteransprüche beinhalten vorteilhafte Weiterbildungen der Erfindung.

Im Zusammenhang mit der Erfindung beschreibt die magnetische Anisotropie die Tatsache, dass magnetische Materialien eine Vorzugsrichtung oder Vorzugsebene für die Magnetisierung aufweisen können. Ein Maß für die magnetische Anisotropie ist die magnetische Anisotropieenergie, also die Arbeit, die benötigt wird, um die Magnetisierung aus der Vorzugsrichtung herauszudrehen.

Nach der Erfindung beschreibt die magnetische Remanenz - kurz Remanenz - den zurückbleibenden Magnetismus, die der Permanentmagnet nach Entfernung eines externen Magnetfeldes beibehält. Vorliegend beschreibt die Remanenz genau den zurückbleibenden Magnetismus, wenn der Permanentmagnet der Sättigungsflussdichte ausgesetzt war.

In der Terminologie der Erfindung bezeichnet die magnetische Koerzitivfeldstärke die magnetische Feldstärke, die notwendig ist, um eine zuvor bis zur Sättigungsflussdichte aufgeladene, ferromagnetische Substanz vollständig und dauerhaft zu entmagnetisieren, so dass der resultierende Gesamtfluss bzw. die lokale Flussdichte gleich null ist. Diese Feldstärke wird in der Regel mit dem Kürzel jHc bezeichnet.

Die Erfindung löst die gestellte Aufgabe mittels einer Kombination von einerseits der Verwendung von CeFeB-Magneten und einem besonderen Motoraufbau.

Im Einzelnen wird erfindungsgemäß vorgeschlagen, dass die Permanentmagnete als Magnete auf CeFeB-Basis ausgebildet sind, wobei die sich zumindest abschnittsweise entlang der Längsachse erstreckenden Permanentmagnete derart ausgebildet und angeordnet sind, dass die einzelnen Permanentmagnete jeweils auf der dem Spalt zugewandten Seite einen Nord- und einen Südpol aufweisen und die Magnetabmessung in Vorzugsrichtung ausgehend von dem Flächenschwerpunkt des Nordpols zwischen 1/10 bis 1/3 des dortigen Rotordurchmessers beträgt.

Eine bevorzugt Ausführungsform sieht vor, dass der Rotor beispielsweise 45mm (+/- 10%) im Bereich der Magnete einschließlich der Magnete im Durchmesser beträgt. Damit ergibt sich die Magnetabmessung in Vorzugsrichtung ausgehend von dem Flächenschwerpunkt des Nordpols zwischen 4,5mm - 15mm. Bei einem Durchmesser von 90mm (+/- 10%) ergibt sich die Magnetdicke ausgehend von dem Flächenschwerpunkt des Nordpols zwischen 9mm - 30mm.

Mischmetall, auch Cer-Mischmetall, ist eine Metall-Legierung aus Metallen der Seltenen Erden. Standardqualitäten bestehen typisch zu mind. 98 % aus Seltenerdmetallen, 1 % Eisen und 0,8 % Magnesium. Da die Metalle der Seltenen Erden wegen ihrer großen chemischen Ähnlichkeit nur sehr aufwändig zu trennen sind, ist es günstiger ein Mischmetall einzusetzen.

Eisen-Mischmetall-Legierungen mit einem Eisenanteil von 15 % bis 50 % bezeichnet man als Cer-Eisen oder mit dem Handelsnamen Auermetall.

Die prozentuale Verteilung der Seltenerdmetalle im klassischen Mischmetall ergibt sich unmittelbar aus der des Ausgangsminerals Monazit: es enthält etwa 45 bis 52 % Cer, 20 bis 27 % Lanthan, 15 bis 18 % Neodym, 3 bis 5 % Praseodym, 1 bis 3 % Samarium, Terbium und Yttrium, Spuren anderer Seltenerdmetalle.

Eine bevorzugte Weiterbildung der Erfindung sieht vor, dass die Permanentmagnete neben technisch unvermeidbar Verunreinigungen eine stoffliche Zusammensetzung nach dem Muster einer Grundzusammensetzung CeFeB+X+Z aufweisen. Hierbei enthält das Material zwischen 20 Gew.-% bis 35 Gew.-% Cer. Die Elemente Nd,Pr,La,Y,Dy,Tb,Gd,Ho sind mit jeweils weniger als 10 Gew.-% und in Summe mit weniger als <15 Gew.-% enthalten. Hierbei gilt außerdem, dass die Summe aus den Komponenten Nd, Pr, La, Y, Dy, Tb, Gd, Ho und Ce zwischen 25 Gew.-% bis 35 Gew.-% beträgt. Die Komponente Z ist mit bis zu 6 Gew.-% enthalten und steht hierbei für mindestens ein Element von Al, Co, Cu, Ga, Si, Ge. mit jeweils maximal 3 Gew.-%. Das Element Bor ist zwischen 0,85 Gew.-% bis 1,1 Gew.-% enthalten. Das Element Fe ist zwischen 59 Gew.-% bis 75 Gew.-% enthalten bzw. bildet den Rest der Zusammensetzung.

Zur Herstellung der Magnete gibt es nach einer vorteilhaften Weiterbildung der Erfindung im Wesentlichen zwei Varianten.

Eine erste Variante - die Herstellung über die "Pulvermetallurgische Route" bzw. der "Sintermagnet" sieht folgende Verfahrensschritte vor:
- Erschmelzen einer Legierung,
- Abgießen und Erstarren der Schmelze zu einem Festkörper, vorzugsweise als Castrip (bzw. Strip-Cast), so dass der Festkörper als Band ergibt,
- Zerkleinern des Festkörpers auf eine Partikelgröße <10pm, bevorzugt <5pm,
- Ausrichten der Partikel in einem Magnetfeld, um eine Vorzugsrichtung bzw. eine magnetische Anisotropie einzustellen,
- Pressen, bevorzugt, dass sich Schalen oder Linsen mit magnetischer Anisotropie ausbilden,
- Sintern,
- Wärmebehandlung.

Eine zweite Variante - die Herstellung über die "Rascherstarrungsroute" bzw. der "Heißpressmagnet" sieht folgende Verfahrensschritte vor:
- Legierung erschmelzen,
- Rascherstarren mittels Schmelzschleuderns zu einem Festkörper,
- Heißpressen des Festkörpers,
- Heißumformen des Presslings, um die Vorzugsrichtung einzustellen.

Das Rascherstarren erfolgt bevorzugt mittels eines schnell drehenden Kupferrads ("melt Spinning"), das die Wärme schnell abführt.

Optional kann bei beiden Varianten jeweils eine Nachbehandlung über Korngrenzdiffusion mit mindestens einem Element aus der Gruppe Nd, Pr, La, Y, Dy, Tb, Gd, Ho, Bo oder Legierungen davon erfolgen.

Heißpressen bzw. heißisostatisches Pressen (HIP) ist eine Entwicklung der Fertigungstechnik, bei der Pulver und ggf. andere Feststoffe, gleichzeitig heiß gepresst und gesintert werden. Es handelt sich um eine Formgebung durch Pressen und das Sintern von Keramik in einem Arbeitsgang.

Das Heißumformen des Presslings bei der zweiten Variante ist ein Umformschritt oberhalb der Rekristallisationstemperatur der beteiligten Metalle. Die während der Umformung ablaufende Verfestigung können durch während und nach dem Umformschritt ablaufende Erholungs- und Entfestigungsprozesse begleitet werden. Es handelt sich insbesondere um Walzen oder Pressen des Werkstücks.

Besonders zweckmäßig ist das Wicklungssystem der Maschine zumindest teilweise in einem Material eingebettet ist, das einen magnetischen Rückschluss bildet.

Gemäß einer vorteilhaften Weiterbildung der Erfindung kann der Rotor als Innenläufer ausgebildet sein und die Permanentmagnete können radial außen an dem Rotor angebracht sein.

Gemäß einer anderen vorteilhaften Weiterbildung der Erfindung kann der Rotor als Außenläufer ausgebildet sein und die Permanentmagnete können auf einer inneren dem Spalt zugewendeten Fläche am Rotor angeordnet ein.

Die Vorteile der Erfindung entfalten sich besonders gut, wenn die Polzahl der Rotormagnete kleiner oder gleich 16 ist. Besonders bevorzugt ist es, wenn die Polzahl kleiner oder gleich 8 ist. Dies lässt sich mittels Simulationen nachweisen.

Eine vorteilhafte Weiterbildung der Erfindung sieht vor, dass die Permanentmagnete mindestens eine der folgenden Eigenschaften aufweisen:
- die Remanenz liegt bei Raumtemperatur zwischen 0,7T und 1,0T,
- die magnetische Koerzitivfeldstärke (jHC) liegt bei Raumtemperatur zwischen -450kA/m und -750kA/m.

Eine vorteilhafte Weiterbildung der Erfindung sieht vor, dass die Maschine derart ausgelegt ist und die Permanentmagnete derart dimensioniert und angeordnet sind, dass im Betrieb der Maschine die B-Feld Amplitude der Grundwelle im Spalt zwischen 0.7T und 0.85T beträgt.

Eine andere vorteilhafte Weiterbildung der Erfindung sieht vor, dass die Permanentmagnete, die jeweils auf der dem Spalt zugewandten Seite einen Nord- und einen Südpol aufweisen eine hufeisenförmige, trapezförmige oder linsenförmige Querschnittsform aufweisen. Wenn die Permanentmagnete linsenförmig, oder schalenförmig ausgeführt sind, ist gewährleistet, dass unabhängig von der Polanzahl des Rotors der vom Spalt abgewandte Abschnitt des Permanentmagneten im Wesentlichen der magnetischen Vorzugsrichtung folgt. Mittels der Linsenform wird ein konstanter Querschnitt des Permanentmagneten für den Feldlinienverlauf erzielt, ohne, dass überflüssiges Magnetmaterial eingesetzt werden müsste. Das hilft Masse zu sparen, um einerseits Massenträgheit zu reduzieren bzw. die Dynamik zu verbessern und andererseits die Kosten für Magnete gering zu halten.

Eine vorteilhafte Weiterbildung der Erfindung sieht weiterhin vor, dass die Magnete axial und/oder radial und/oder in Umfangsrichtung segmentiert bzw. zusammengesetzt - bevorzugt zumindest teilweise zusammengeklebt - ausgebildet sind. Diese Möglichkeit eröffnet infolge der Modularität eine gute Flexibilität der Gestaltung und erleichtert die Herstellung. Alternativ können die Permanentmagnete zumindest radial und/oder in Umfangsrichtung einstückig ausgebildet sein, so dass sich verbesserte Magneteigenschaften ergeben können und reduzierten Fügestellen keine mechanischen Schwachstellen darstellen.

Bei der Möglichkeit, die vorsieht, dass die Permanentmagnete jeweils auf der dem Spalt zugewandten Seite einen Nord- und einen Südpol aufweisen, ist es zweckmäßig, wenn die Permanentmagnete jeweils derart ausgebildet und an dem Rotor angebracht sind, dass die Magnetlinien seitens des Spalts in den Rotor an einer ersten Umfangsposition eintreten, derart umgelenkt werden, dass sie abschnittsweise tangential verlaufen und die Magnetlinien an einer zweiten Umfangsposition aus dem Rotor austreten.

Eine bevorzugte Ausführungsform des Motors sieht für die Magnete vor, dass
- die Magnete vorzugsweise in axiale Segmente von 3mm bis 5mm geteilt sind und/oder
- Die Magnetabmessung in Vorzugsrichtung in der Mitte des Pols liegt zwischen 5mm und 12mm bei schalenförmigen Magneten und bei linsenförmigen, hufeisenförmigen (s. Bild 2) Magneten zwischen 10mm und 25mm.

Eine bevorzugte Ausführungsform des Motors sieht für die Motorkonstruktion außerdem vor, dass:
- die Polzahl höchstens 16, besonders bevorzugt 8 beträgt und/oder
- Der Abstand zwischen dem Eisenzähnen des Stators zum Rotor beträgt 0.6mm bis 1mm beträgt und/oder
- Die Statorbleche haben vorzugsweise eine Blechdicke kleiner als 150µm aufweisen und/oder
- Die Nutschlitze zwischen den Zähnen bei allen Blechen vorhanden sind.

Infolge der Erfindung und der beschriebenen Weiterbildungen ergibt sich jeweils eine permanenterregte dynamoelektrische Maschine mit geringerer Induktivität. Damit kann der Strom schnell aufgebaut werden, was zu einer hohen Dynamik führt. Ferner ist damit auch die Spannungsgrenzkennlinie zu hohen Drehmomenten verschoben, was ebenfalls die Dynamik des Motors erhöht. Die gewählte Luftspaltinduktion ermöglicht hohe Drehmomente mit dem thermisch zulässigen Statorstrom. So ist es auch möglich, die hohe Dynamik über einen langen Zeitraum zu nutzen. Der Statorstrom erzeugt eine geringe Ankerrückwirkung, so dass der Zusammenhang zwischen Strom und Drehmoment bis zu hohen Drehmomenten linear ist. Daraus ergibt sich eine Verbesserung der Dynamik des Motors. Der erfindungsgemäße Aufbau führt zu einem Motor, der die Produktivität der Anwendungsmaschine erhöht. Das gilt insbesondere für Werkzeugmaschinen, Roboter und Produktionsmaschinen.

Im Folgenden ist die Erfindung anhand spezieller Ausführungsbeispiele zur Verdeutlichung näher beschrieben. Es zeigen:
- Figur 1: eine schematische, vereinfachte Querschnittsdarstellung einer permanenterregten dynamoelektrischen Maschine, wobei Figur 1 nur dazu dient, das Verständnis der Erfindung zu erleichtern, ,
- Figur 2: eine schematische, vereinfachte Querschnittsdarstellung einer ersten Variante einer permanenterregten dynamoelektrischen Maschine nach der Erfindung,
- Figur 3: eine schematische Darstellung eines ersten Herstellungsverfahrens der Permanentmagnete,
- Figur 4: eine schematische Darstellung eines zweiten Herstellungsverfahrens der Permanentmagnete,
- Figur 5: eine schematische Darstellung einer - nicht patentanspruchsgemäßen - auf einem Computer ablaufenden Simulation des Betriebes einer Maschine nach der Erfindung, Computerprogrammprodukt.

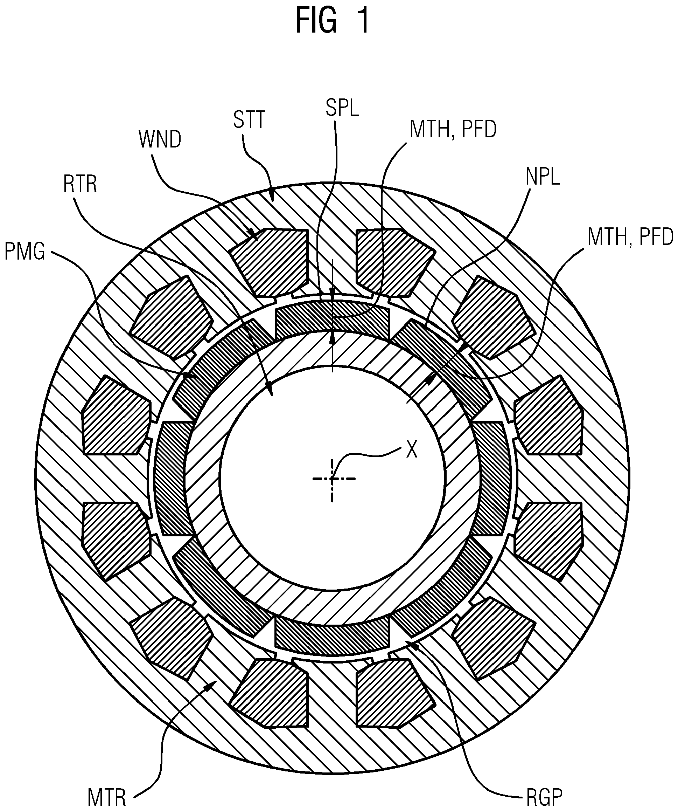

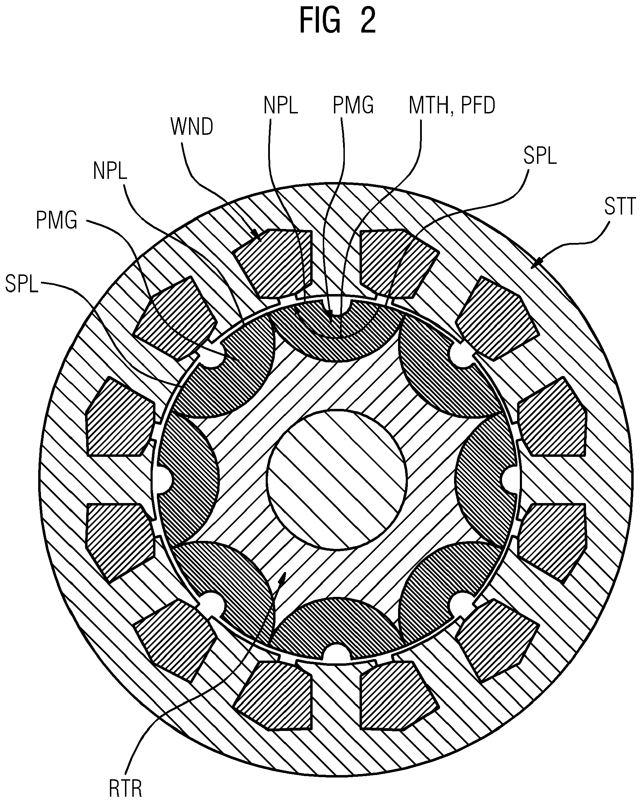

Figuren 1 und 2 zeigen jeweils eine schematische Querschnittsdarstellung einer permanenterregten dynamoelektrischen Maschine PDM, mit einem Stator STT und einem um eine Längsachse X rotierbar gelagerten Rotor RTR. Der Stator STT weist ein Wicklungssystem WND auf. An dem Rotor RTR sind Permanentmagnete PMG angeordnet. Zwischen dem Rotor RTR und dem Stator STT ist ein Spalt RGP ausgebildet. Das Wicklungssystem WND ist derart ausgebildet und angeordnet ist, dass es mit den Permanentmagneten PMG des Rotors RTR über den Spalt RGP elektromagnetisch wechselwirkt.

Die Permanentmagnete PMG sind als Magnete auf CeFeB-Basis ausgebildet. Sie erstrecken sich zumindest abschnittsweise entlang der Längsachse X. Vorliegend weisen die Permanentmagnete PMG entlang ihrer axialen Erstreckung einen im Wesentlichen konstanten Querschnitt auf.

Das magnetische Material der Permanentmagnete PMG weist eine Vorzugsrichtung PFD für die Magnetisierung auf, so dass sich in Richtung der jeweils lokalen Vorzugsrichtung PFD Pfade durch den Permanentmagneten PMG definieren lassen. Eine Magnetdicke MTH zugeordnet zu einem Punkt an einer Polfläche PAR ist dadurch definiert als die Pfadlänge von diesem Punkt bis zu einem korrespondieren Punkt an der anderen Polfläche entlang der Vorzugsrichtung PFD durch den Permanentmagneten PMG.

Das Wicklungssystem WND ist in einem Material MTR eingebettet das einen magnetischen Rückschluss bildet.

Der Rotor RTR ist als Innenläufer ausgebildet und die Permanentmagnete PMG sind radial außen an dem Rotor RTR angebracht. Alternativ kann der Rotor RTR auch als Außenläufer ausgebildet sein, wobei die Permanentmagnete PMG auf einer inneren dem Spalt zugewendeten Fläche am Rotor RTR dann angeordnet wären.

In Figur 1, die ein Beispiel zeigt, das nur dazu dient, das Verständnis der Erfindung zu erleichtern, kleiden die Permanentmagnete PMG schalenartig den Rotor RTR gegenüber dem Spalt RGP ein. Die Magnetdicke MTH in Vorzugsrichtung beträgt ausgehend von dem Flächenschwerpunkt des Nordpols zwischen 1/10 und 1/5 des dortigen Rotordurchmessers.

In Figur 2 weisen die Permanentmagnete PMG jeweils auf der dem Spalt RGP zugewandten Seite einen Nordpol NPL und einen Südpol SPL auf. Die Magnetdicke MTH in Vorzugsrichtung beträgt ausgehend von dem Flächenschwerpunkt des Nordpols NPL zwischen 1/10 bis 1/3 des dortigen Rotordurchmessers.

Die Permanentmagnete PMG weisen die folgenden Eigenschaften auf:
- die Remanenz liegt bei Raumtemperatur zwischen 0,7T und 1,0T,
- die magnetische Koerzitivfeldstärke jHC liegt bei Raumtemperatur zwischen -450kA/m und -750kA/m.

Die dem Spalt RGP zugewendete Polzahl der Permanentmagnete PMG an dem Rotor RTR beträgt in der Ausführungsform der Figur 1 und in der Figur 2 jeweils acht. Jeder dortige Nordpol NPL oder Südpol SPL wird von dem jeweils anderen Pol begrenzt. Die Pole sind in der Figur 2 jeweils von zwei benachbarten Permanentmagneten gemeinsam gebildet, die gegengleich ausgerichtet benachbart angeordnet sind. Es handelt sich jeweils um 8 Permanentmagnete PMG an dem Rotor.

Im Betrieb der Maschine PDM beträgt die B-Feld Amplitude der Grundwelle im Spalt RGP zwischen 0.7T und 0.85T.

Die Permanentmagnete PMG bestehen neben technisch unvermeidbaren Verunreinigungen aus einer stofflichen Zusammensetzung nach dem Muster CeFeB+X+Z, im Einzelnen bestehend aus:

| Bestandteil | Gewichtsanteil |
|---|---|
| Ce | 20 Gew.-% bis 35 Gew.-% |
| wobei X mindestens aus einem Element besteht von Nd, Pr, La, Y, Dy, Tb, Gd, Ho | jeweils <10 Gew.-% und in der Summe <15 Gew.-% |
| wobei Ce+X | 25 Gew.-% bis 35 Gew.-% |
| Z mindestens ein Element von Al, Co, Cu, Ga, Si, Ge | jeweils <3 Gew.-% und Summe <6 Gew.-% |
| B | 0,85 Gew.-% bis 1,1 Gew.-% |
| Fe | Rest |

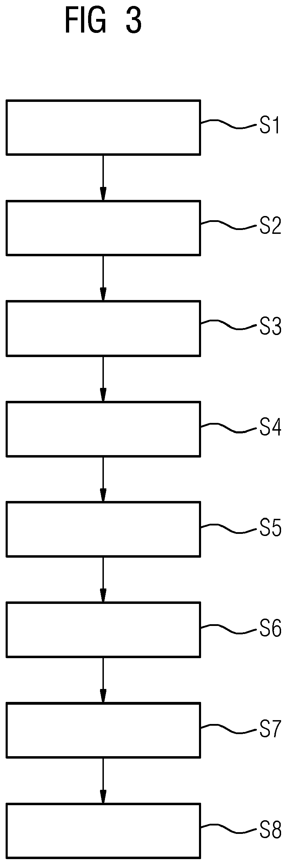

Ein in Figur 3 schematisch dargestelltes erstes Herstellungsverfahren der Permanentmagnete PMG sieht die Verfahrensschritte vor:
S1 Erschmelzen einer Legierung,
S2 Abgießen und Erstarren der Schmelze zu einem Festkörper, vorzugsweise als Castrip, so dass der Festkörper als Band ergibt,
S3 Zerkleinern des Festkörpers auf eine Partikelgröße <10pm, bevorzugt <5pm,
S4 Ausrichten der Partikel in einem Magnetfeld, um eine Vorzugsrichtung einzustellen,
S5 Pressen,
S6 Sintern,
S7 Wärmebehandlung,
S8 Nachbehandlung über Korngrenzdiffusion mit mindestens einem Element aus der Gruppe Nd, Pr, La, Y, Dy, Tb, Gd, Ho, B oder Legierungen davon.

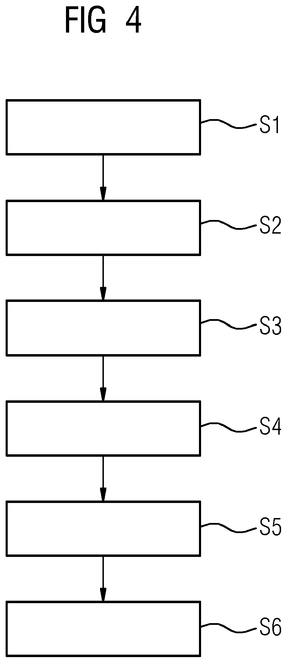

Ein in Figur 4 schematisch dargestelltes alternatives zweites Herstellungsverfahren der Permanentmagnete PMG sieht die Verfahrensschritte vor:
S1 Legierung erschmelzen,
S2 Rascherstarren mittels Schmelzschleuderns zu einem Festkörper,
S3 Heißpressen des Festkörpers,
S4 Heißumformen des Presslings, um die Vorzugsrichtung einzustellen,
S5 Nachbehandlung über Korngrenzdiffusion mit mindestens einem Element aus der Gruppe Nd, Pr, La, Y, Dy, Tb, Gd, Ho, B oder Legierungen davon.

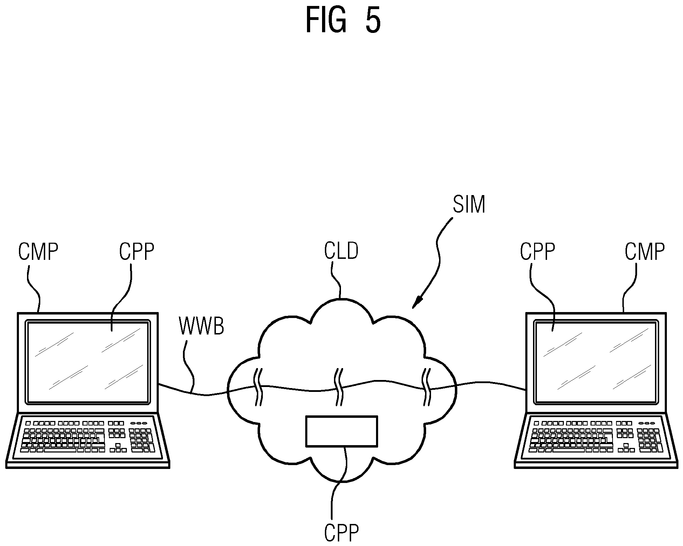

Figur 5 zeigt eine - nicht patentanspruchsgemäße - schematische Darstellung einer auf einem Computer CMP - hier auf mehreren Computern CMP eines Netzwerks WWB umfassend eine Cloud CLD - ablaufenden Simulation SIM einer permanenterregten dynamoelektrischen Maschine PDM nach der Erfindung. Die auf den Computern CMP installierte Software ist ein Computerprogrammprodukt CPP, das bei Ausführung auf mindestens einem Computer CMP dem Benutzer mittels Schnittstellen, z.B. mittels Bildschirms und Tastatur eine Einflussnahme bzw. Konfiguration und einen Erkenntnisgewinn auf Basis der ausgeführten Simulation SIM ermöglicht, so dass insbesondere technische Gestaltungsentscheidungen mittels der Simulation unterstützt und verifiziert werden können. Das Simulationsverfahren und das Computerprogrammprodukt sind nicht Bestandteil der beanspruchten Erfindung.

Obwohl die Erfindung im Detail durch das bevorzugte Ausführungsbeispiel näher illustriert und beschrieben wurde, ist die Erfindung nicht durch die offenbarten Beispiele eingeschränkt. Variationen hiervon können vom Fachmann abgeleitet werden, ohne den Schutzumfang der Erfindung, wie er durch die nachfolgenden Patentansprüche definiert wird, zu verlassen.

## Patentansprüche

1. Permanenterregte dynamoelektrische Maschine (PDM), mit einem Stator (STT) und einem um eine Längsachse (X) rotierbar gelagerten Rotor (RTR),
wobei der Stator (STT) ein Wicklungssystem (WND) aufweist, wobei an dem Rotor (RTR) Permanentmagnete (PMG) angeordnet sind,
wobei das magnetische Material der Permanentmagnete (PMG) eine Vorzugsrichtung (PFD) für die Magnetisierung aufweist, so dass sich in Richtung der jeweils lokalen Vorzugsrichtung (PFD) Pfade durch den Permanentmagneten (PMG) definieren lassen, wobei eine Magnetabmessung (MTH) in Vorzugsrichtung (PFD) zugeordnet zu einem Punkt an einer Polfläche (PAR) definiert ist als die Pfadlänge von diesem Punkt bis zu einem korrespondieren Punkt an der anderen Polfläche entlang der Vorzugsrichtung (PFD) durch den Permanentmagneten (PMG),
wobei zwischen dem Rotor (RTR) und dem Stator (STT) ein Spalt (RGP) ausgebildet ist,
wobei das Wicklungssystem (WND) derart ausgebildet und angeordnet ist, dass es mit den Permanentmagneten (PMG) des Rotors (RTR) über den Spalt (RGP) elektromagnetisch wechselwirkt,
wobei die Permanentmagnete (PMG) als Magnete auf CeFeB-Basis ausgebildet sind, wobei die sich zumindest abschnittsweise entlang der Längsachse (X) erstreckenden Permanentmagnete (PMG) derart ausgebildet und angeordnet sind, dass die Permanentmagnete (PMG) jeweils auf der dem Spalt (RGP) zugewandten Seite einen Nordpol (NPL) und einen Südpol (SPL) aufweisen,
**dadurch gekennzeichnet, dass**
die Magnetabmessung (MTH) in Vorzugsrichtung (PFD) ausgehend von dem Flächenschwerpunkt des Nordpols zwischen 1/10 bis 1/3 des dortigen Rotordurchmessers beträgt.

2. Maschine (PDM) nach Anspruch 1, wobei die Permanentmagnete (PMG) mindestens eine der folgenden Eigenschaften aufweisen:
- die Remanenz liegt bei Raumtemperatur zwischen 0,7T und 1,0T,
- die magnetische Koerzitivfeldstärke (jHC) liegt bei Raumtemperatur zwischen -450kA/m und -850kA/m.

3. Maschine (PDM) nach Anspruch 1 oder 2, wobei im Betrieb der Maschine (PDM) die B-Feld Amplitude der Grundwelle im Spalt (RGP) zwischen 0.7T und 0.85T beträgt.

4. Maschine (PDM) nach mindestens einem der vorhergehenden Ansprüche, wobei die Polzahl der Permanentmagnete (PMG) an dem Rotor (RTR) seitens des Spalts (RGP) kleiner oder gleich 16 ist

5. Maschine (PDM) nach mindestens einem der vorhergehenden Ansprüche, wobei die Permanentmagnete (PMG), die jeweils auf der dem Spalt (RGP) zugewandten Seite einen Nord- und einen Südpol aufweisen eine hufeisenförmige, trapezförmige oder linsenförmige Querschnittsform aufweisen.

6. Maschine (PDM) nach mindestens einem der vorhergehenden Ansprüche, wobei die Permanentmagnete (PMG) neben technisch unvermeidbaren Verunreinigungen eine stoffliche Zusammensetzung nach dem Muster CeFeB+X+Z aufweisen, bestehend aus:
| Bestandteil | Gewichtsanteil |
|---|---|
| Ce | 20 Gew.-% bis 35 Gew.-% |
| wobei X mindestens aus einem Element besteht von Nd, Pr, La, Y, Dy, Tb, Gd, Ho | jeweils <10 Gew.-% und in der Summe <15 Gew.-% |
| wobei Ce+X | 25 Gew.-% bis 35 Gew.-% |
| Z mindestens ein Element von Al, Co, Cu, Ga, Si, Ge | jeweils <3 Gew.-% und Summe <6 Gew.-% |
| B | 0,85 Gew.-% bis 1,1 Gew.-% |
| Fe | Rest |

7. Maschine (PDM) nach mindestens einem der vorhergehenden Ansprüche, wobei die Permanentmagnete (PMG) hergestellt sind mittels der Verfahrensschritte:
- Erschmelzen einer Legierung,
- Abgießen und Erstarren der Schmelze zu einem Festkörper, vorzugsweise als Castrip, so dass der Festkörper als Band ergibt,
- Zerkleinern des Festkörpers auf eine Partikelgröße <10pm, bevorzugt <5pm,
- Ausrichten der Partikel in einem Magnetfeld, um eine Vorzugsrichtung einzustellen,
- Pressen,
- Sintern,
- Wärmebehandlung.

8. Maschine (PDM) nach mindestens einem der vorhergehenden Ansprüche 1 - 6, wobei die Permanentmagnete (PMG) hergestellt sind mittels:
- Legierung erschmelzen,
- Rascherstarren mittels Schmelzschleuderns zu einem Festkörper,
- Heißpressen des Festkörpers,
- Heißumformen des Presslings, um die Vorzugsrichtung einzustellen.

9. Maschine (PDM) nach Anspruch 7 oder 8, wobei die Permanentmagnete (PMG) hergestellt sind mittels dem zusätzlichen anschließenden Verfahrensschritt:
- Nachbehandlung über Korngrenzdiffusion mit mindestens einem Element aus der Gruppe Nd, Pr, La, Y, Dy, Tb, Gd, Ho, B oder Legierungen davon.

## Claims

1. Permanent-magnet dynamoelectric machine (PDM), comprising a stator (STT) and a rotor (RTR) mounted rotatably about a longitudinal axis (X),
wherein the stator (STT) has a winding system (WND),
wherein permanent magnets (PMG) are arranged on the rotor (RTR), wherein the magnetic material of the permanent magnets (PMG) has a preferred direction (PFD) for the magnetization, so that paths through the permanent magnet (PMG) can be defined in the direction of the local preferred direction (PFD) in each case, wherein a magnet dimension (MTH) in the preferred direction (PFD) assigned to a point on a pole face (PAR) is defined as the path length from this point to a corresponding point on the other pole face along the preferred direction (PFD) through the permanent magnet (PMG),
wherein a gap (RGP) is formed between the rotor (RTR) and the stator (STT),
wherein the winding system (WND) is designed and arranged such that it interacts electromagnetically with the permanent magnets (PMG) of the rotor (RTR) via the gap (RGP),
wherein the permanent magnets (PMG) are designed as CeFeB-based magnets, wherein the permanent magnets (PMG) extending at least in portions along the longitudinal axis (X) are designed and arranged in such a way that the permanent magnets (PMG) each have a north pole (NPL) and a south pole (SPL) on the side facing the gap (RGP),
**characterized in that**
the magnet dimension (MTH) in the preferred direction (PFD), proceeding from the area centroid of the north pole, is between 1/10 and 1/3 of the rotor diameter there.

2. Machine (PDM) according to Claim 1, wherein the permanent magnets (PMG) have at least one of the following properties:
- the remanence at room temperature is between 0.7 T and 1.0 T,
- the magnetic coercive field strength (jHC) at room temperature is between -450 kA/m and -850 kA/m.

3. Machine (PDM) according to Claim 1 or 2, wherein during operation of the machine (PDM), the B-field amplitude of the fundamental wave in the gap (RGP) is between 0.7 T and 0.85 T.

4. Machine (PDM) according to at least one of the preceding claims, wherein the pole number of the permanent magnets (PMG) on the rotor (RTR) at the gap (RGP) is less than or equal to 16.

5. Machine (PDM) according to at least one of the preceding claims, wherein the permanent magnets (PMG) each having a north pole and a south pole on the side facing the gap (RGP) have a horseshoe-shaped, trapezium-shaped or lens-shaped crosssectional shape.

6. Machine (PDM) according to at least one of the preceding claims, wherein the permanent magnets (PMG) have, besides technically unavoidable impurities, a substance composition according to the pattern CeFeB+X+Z, consisting of:
| Constituent | Proportion by weight |
|---|---|
| Ce | 20% by weight to 35% by weight |
| where X consists at least of an element from Nd, Pr, La, Y, Dy, Tb, Gd, Ho | in each case <10% by weight and in total <15% by weight |
| where Ce+X | 25% by weight to 35% by weight |
| Z is at least one element from Al, Co, Cu, Ga, Si, Ge | in each case <3% by weight and total <6% by weight |
| B | 0.85% by weight to 1.1% by weight |
| Fe | remainder |

7. Machine (PDM) according to at least one of the preceding claims, wherein the permanent magnets (PMG) are produced by means of the method steps of:
- melting an alloy,
- casting and solidifying the melt to form a solid body, preferably as Castrip, such that the resulting solid body is a strip,
- comminuting the solid body to a particle size of <10 um, preferably <5 um,
- aligning the particles in a magnetic field in order to set a preferred direction,
- pressing,
- sintering,
- heat treatment.

8. Machine (PDM) according to at least one of the preceding Claims 1 - 6, wherein the permanent magnets (PMG) are produced by means of:
- melting of alloy,
- rapid solidification by means of melt spinning to form a solid body,
- hot pressing of the solid body,
- hot forming of the compact in order to set the preferred direction.

9. Machine (PDM) according to Claim 7 or 8, wherein the permanent magnets (PMG) are produced by means of the additional subsequent method step of:
- aftertreatment by way of grain boundary diffusion with at least one element from the group Nd, Pr, La, Y, Dy, Tb, Gd, Ho, B or alloys thereof.

## Revendications

1. Machine (PDM) dynamoélectrique à excitation permanente, comprenant un stator (STT) et un rotor (RTR) monté tournant autour d'un axe (X) longitudinal,
dans laquelle le stator (STT) a un système (WND) d'enroulement,
dans laquelle des aimants (PMG) permanents sont montés sur le rotor (RTR),
dans laquelle le matériau magnétique des aimants (PMG) permanents a une direction (PFD) préférée d'aimantation, de manière à pouvoir définir, dans la direction de la direction (PFD) locale préférée respectivement, des chemins dans les aimants (PMG) permanents, dans laquelle une dimension (MTH) d'aimant dans la direction (PFD) préférée est définie, associée à un point sur une surface (PAR) polaire, comme la longueur du chemin de ce point jusqu'à un point correspondant à l'autre surface polaire le long de la direction (PFD) préférée dans l'aimant (PMG) permanent, dans laquelle un entrefer (RGP) est défini entre le rotor (RTR) et le stator (STT),
dans laquelle le système (WND) d'enroulement est constitué et monté de manière à coopérer électromagnétiquement en passant par l'entrefer (RGP) avec les aimants (PMG) permanents du rotor (RTR),
dans laquelle les aimants (PMG) permanents sont constitués sous la forme d'aimants à base de CeFeB,
dans laquelle les aimants (PMG) permanents, s'étendant au moins par tronçons le long de l'axe (X) longitudinal, sont constitués et montés de façon à ce que les aimants (PMG) permanents aient chacun, du côté tourné vers l'entrefer (RGP), un pôle (NPL) nord et un pôle (SPL) sud, **caractérisée en ce que**
la dimension (MTH) des aimants dans la direction (PFD) préférée à partir du centre de gravité de surface du pôle nord représente entre 1/10 jusqu'à 1/3 du diamètre du rotor à cet endroit.

2. Machine (PDM) suivant la revendication 1, dans laquelle les aimants (PMG) permanents ont au moins l'une des propriétés suivantes :
- la rémanence à la température ambiante est comprise entre 0,7 T et 1,0 T,
- l'intensité (jHC) du champ coercitif magnétique à la température ambiante est comprise entre -450 kA/m et - 850 kA/m.

3. Machine (PDM) suivant la revendication 1 ou 2, dans laquelle, lorsque la machine (PDM) est en fonctionnement, l'amplitude du champ B de l'onde fondamentale dans l'entrefer (RGP) est comprise entre 0,7 T et 0,85 T.

4. Machine (PDM) suivant au moins l'une des revendications précédentes, dans laquelle le nombre de pôles des aimants (PMG) permanents sur le rotor (RTR) du côté de l'entrefer (RGP) est inférieur ou égal à 16.

5. Machine (PDM) suivant au moins l'une des revendications précédentes, dans laquelle les aimants (PMG) permanents, qui ont respectivement un pôle nord et un pôle sud du côté tourné vers l'entrefer (RGP), ont une forme en section droite en forme de fer à cheval, trapézoïdale ou lenticulaire.

6. Machine (PDM) suivant au moins l'une des revendications précédentes, dans laquelle les aimants (PMG) permanents ont, outre des impuretés inévitables techniquement, une composition de matière suivant le modèle CeFeB+X+Z, constitué de :
| constituant | proportion en poids |
|---|---|
| Ce | de 20 % en poids à 35 % en poids |
| dans laquelle X est en au moins un élément de Nd, Pr, La, Y, Dy, Tb, Gd, Ho | respectivement < 10 % en poids et dans la somme < 15 % en poids |
| dans laquelle Ce+X | de 25 % en poids à 35 % en poids |
| Z au moins un élément de Al, Co, Cu, Ga, Si, Ge | respectivement < 3 % en poids et somme < 6 % en poids |
| B | 0,85 % en poids à 1,1 % en poids |
| Fe | le reste |

7. Machine (PDM) suivant l'une des revendications précédentes, dans laquelle les aimants (PMG) permanents sont produits au moyen des stades de procédé :
- fusion d'un alliage,
- coulée et solidification de la masse fondue en un corps solide, de préférence en castrip, de manière à donner le corps solide sous la forme d'une bande,
- fragmentation du corps solide à une granulométrie < 10 um, de préférence < 5 um,
- orientation des particules dans un champ magnétique, pour établir une direction préférée,
- pressage,
- frittage,
- traitement thermique.

8. Machine (PDM) suivant au moins l'une des revendications 1 à 6 précédentes, dans laquelle les aimants (PMG) permanents sont produits au moyen :
- d'une fusion d'alliage,
- d'une solidification rapide au moyen de centrifugeuse de fusion en un corps solide,
- d'un pressage à chaud du corps solide,
- d'une transformation à chaud de l'ébauche, pour établir la direction préférée.

9. Machine (PDM) suivant la revendication 7 ou 8, dans laquelle les aimants (PMG) permanents sont produits au moyen du stade de procédé supplémentaire suivant :
- post-traitement par diffusion de joint de grain avec au moins un élément choisi dans le groupe Nd, Pr, La, Y, Dy, Tb, Gd, Ho, B ou leurs alliages.
